# EUROPEAN PATENT APPLICATION

(11) **EP 1 193 989 A1**
(43) Date of publication of application: **03.04.2002**
(21) Application number: 00922943.6
(22) Date of filing: 01.05.2000
(51) Int. Cl.: H04Q 7/38, H04B 7/15

(54) **CONNECTION-CONTROL METHOD FOR MOBILE COMMUNICATION SYSTEM**

(71) Applicant: MITSUBISHI DENKI KABUSHIKI KAISHA, Tokyo 100-8310 (JP)
(72) Inventor: YAMADA, Yoshiko, Chiyoda-ku, Tokyo 100-8310 (JP)
(74) Representative: Bohnenberger, Johannes, Dr.
(86) International application number: JP0002885
(87) International publication number: WO0184873

(57) **Abstract**

When an incoming call is undeliverable to a cellular mobile station 15 via a ground-based exchange station 9 of a mobile communication network 10 where an incoming request is made to the cellular mobile station 15 whose position has been registered in a ground-based system 11, a dual function is utilized so that an incoming call is delivered to a satellite single mobile station 16 position-registered in a satellite-based system 6 via a satellite 2 by way of a satellite-based exchange station 4 of a satellite communication network 5.

## Description

### TECHNICAL FIELD

The present invention relates to a connection control method suitable for a mobile communication system.

### BACKGROUND ART

In mobile communication systems, there is known a system wherein a connection control method is effected on a mobile station (mobile unit) through the use of a satellite-based system as well as a ground-based system. A connection control method using a ground-based system and a satellite-based system has been described in each of JP-A 09-46751 and JP-A 07-154859, for example.

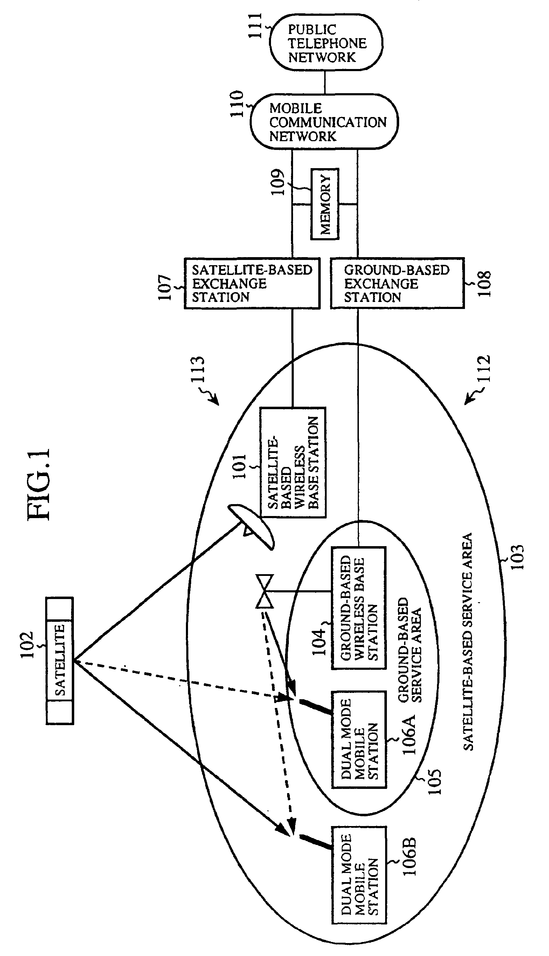

FIG. 1 is a system configuration diagram of a "satellite-based/ground-based integrated mobile communication system" described in JP-A 09-46751. In the drawing, reference numeral 101 indicates a satellite-based wireless base station, reference numeral 102 indicates a satellite, reference numeral 103 indicates a satellite-based service area, reference numeral 104 indicates a ground-based wireless base station, reference numeral 105 indicates a ground-based service area, reference numerals 106 (106A and 106B) indicate dual mode mobile stations, reference numeral 107 indicates a satellite-based exchange or switching station, reference numeral 108 indicates a ground-based exchange or switching station, reference numeral 109 indicates a home memory, reference numeral 110 indicates a mobile communication network, reference numeral 111 indicates a public telephone network, reference numeral 112 indicates a ground-based system, and reference numeral 113 indicates a satellite-based system, respectively.

While the dual mode mobile station 106A and the dual mode mobile station 106B are identical in system configuration to each other, the dual mode mobile station 106A communicates with the ground-based system 112 according to modes, whereas the dual mode mobile station 106B communicates with the satellite-based system 113 according thereto.

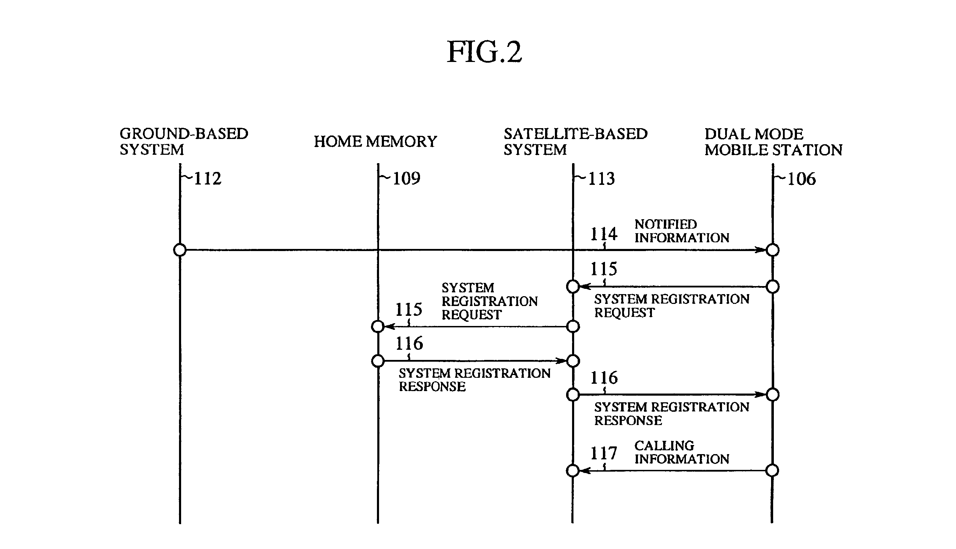

The operation will next be explained with reference to FIG. 2.

When the dual mode mobile station 106 (106A in this case) operated in a ground-based mode receives information 114 notified from the ground-based system 112, the dual mode mobile station 106 recognizes congestion, based on the notified information 114. When the dual mode mobile station 106 judges that a system registration should be changed, it transmits a system registration request 115 to the satellite-based system 113.

The satellite-based system 113 transmits the system registration request 115 to the home memory 109 to make a request for a registration change. The home memory 109 changes the registration of the dual mode mobile station 106A from a ground system to a satellite system according to the registration change, and notifies a system registration response 116 indicative of the completion of the registration change to the satellite-based system 113.

The satellite-based system 113 transmits the system registration response 116 to the dual mode mobile station 106A. When the dual mode mobile station 106A receives the system registration response 116, it judges that the change in system registration has been completed. Further, the dual mode mobile station 106A changes the function from the ground-based mode to a satellite-based mode and transmits calling information 117 to the satellite-based system 113 as the dual mode mobile station 106B.

Thus, the dual mode mobile station 106 changes the ground-based system 112 to the satellite-based system 113 to thereby make it possible to avoid congestion of the ground-based system 112.

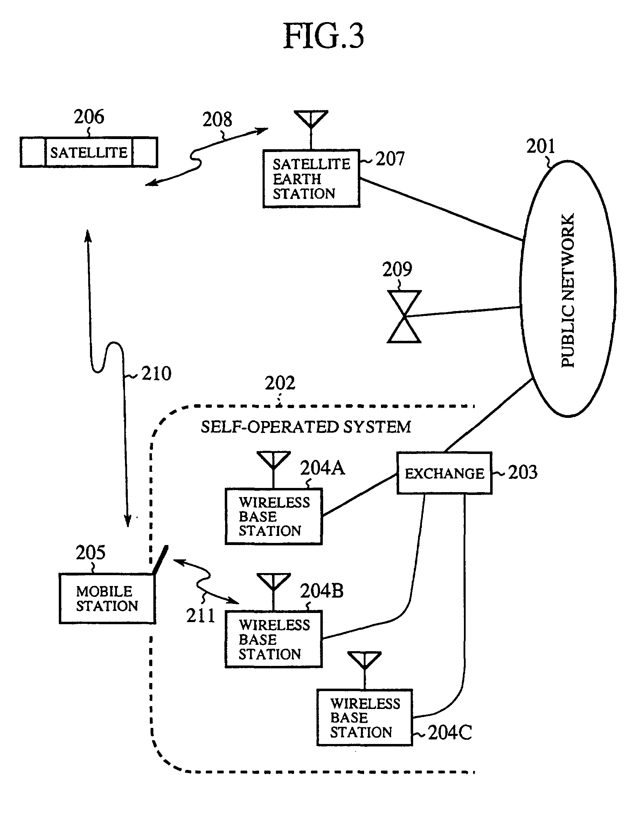

FIG. 3 is a system configuration diagram of "a mobile unit, an exchange station and a mobile communication system" described in JP-A 07-154859. In the drawing, reference numeral 201 indicates a public network, reference numeral 202 indicates a self-operated system, reference numeral 203 indicates an exchange, reference numerals 204 (204A, 204B and 204C) indicate wireless base stations, reference numeral 205 indicates a mobile station or unit, reference numeral 206 indicates a satellite, reference numeral 207 indicates a satellite earth station, reference numeral 208 indicates a satellite basic line which connects the satellite 206 and the satellite earth station 207, reference numeral 209 indicates a subscriber telephone connected to the public network 201, reference numeral 210 indicates a wireless channel or communication path which connects the mobile unit 205 and the satellite 206, and reference numeral 211 indicates a wireless communication path which connects the mobile unit 205 and the wireless base station 204, respectively.

The operation will next be explained.

The mobile unit 205 is connectable to any of the self-operated system 202, the public network 201 and the satellite 206. The mobile unit 205 measures a received level of a system which needs a connection and is connected to the system according to priority determined according to the measured received level. The wireless base station 204 establishes a communication path set between the mobile unit 205 and the exchange 203 by means of wireless communications with the mobile unit 205 and wire communications with the exchange 203 in the self-operated system 202.

The exchange 203 is provided with a protocol for performing communications between the satellite system using the self-operated system 202, the public network 201 and the satellite 206, and another self-operated system (not shown). The exchange 203 performs a communication process according to a protocol corresponding to a system selected by the mobile unit 205 set as a target. When the mobile unit 205, which has communicated with the exchange 204B, for example, is moved beyond a zone of a service area for the self-operated system 202 and cannot be connected to the public network 201 at its moved destination, the exchange 203 makes a satellite line setting request to the public network 201 and transmits roaming (communication roaming) information and accounting information to the satellite earth station 207 through the public network 201, thereby performing roaming from the self-operated system 202 to the satellite system.

Thus, even in the above-described system, the mobile unit 205 constitutes a dual mode mobile station connectable to both the ground-based system and the satellite-based system for the self-operated system 202 or the public network 201. When the mobile unit 205 is unconnectable to the ground-based system, the mobile unit 205 is capable of performing switching to the satellite-based system to perform communications therewith.

Since the connection control method employed in the conventional mobile communication system is configured as described above, a dual function can be utilized by use of the dual mode mobile station but could not be exploited by use of the satellite single mobile station in the satellite-based system and the cellular mobile station in the ground-based system.

The connection control method described in JP-A 09-46751 is accompanied by a problem that when a user moves outside a cellular service area while carrying a satellite single mobile station in a state in which the user turns a cellular mobile station on (keeps it in a waiting state) and places it in the cellular service area even if the switching to the other system can be performed when one system is congested, this bears no relation to the congestion and hence an incoming call cannot be delivered to a satellite single mobile station.

The connection control method described in JP-A 07-154859 is accompanied by a problem that since priorities to a plurality of systems are set according to received levels, an incoming call cannot be delivered to a satellite single mobile station where a received level of the satellite single mobile station is lower than that of a cellular mobile station when a user moves beyond a zone of a cellular service area while carrying the satellite single mobile station in a state in which the user turns on the cellular mobile station and places it in the cellular service area.

Further, a problem arises in that while the accounting information is transmitted together with the notified information when the roaming (communication roaming) from the self-operated system to the satellite system is made, it is not possible to select either of the calling side and the called side, either of which is to pay the accounting.

The present invention has been made to solve the above-described problems. The present invention aims to realize connection control methods for implementing the following respective functions.
1. To enable a dual function using two mobile stations of a satellite single mobile station and a cellular mobile station.
2. To enable an incoming function for a satellite single mobile station even when a cellular mobile station is kept in a waiting state.
3. To enable an incoming function for a mobile station desired by a user.
4. To enable a selecting function as to whether accounting should depend on either the calling side or the called side.

### DISCLOSURE OF THE INVENTION

A connection control method suitable for a mobile communication system, according to the present invention includes the steps of: registering positions of the respective mobile stations in system groupings to which the respective mobile stations correspond; storing information about the registration of a position of one mobile station at a memory address specified for the corresponding mobile station; storing information for identifying the other mobile station at the specified memory address; retrieving information about a position registration at a memory address specified for any of the mobile stations according to the incoming request sent from the public telephone network; retrieving the information for identifying the other mobile station, which has been stored at the memory address for the corresponding position registration information when an incoming call is undeliverable to the corresponding mobile station depending on the retrieved position registration information; and delivering an incoming call to the other mobile station according to the retrieved identification information.

Owing to this, an advantageous effect is obtained in that two mobile stations of a cellular mobile station and a satellite single mobile station are used to allow or enable a dual function, based on the connection control method capable of delivering an incoming call to any mobile station.

In the connection control method for the mobile communication system, according to the present invention, the identification information retrieving step retrieves identification information for a satellite single mobile station when an incoming call is undeliverable to a cellular mobile station depending on information about the registration of a position of the cellular mobile station, and the step of delivering the incoming call to the mobile station delivers an incoming call to the satellite single mobile station according to the retrieved identification information.

Owing to this, an advantageous effect is obtained in that even when the cellular mobile station is held in a waiting state but is unable to receive or get an incoming call due to a reduction in received level, congestion, etc., a dual function, which automatically delivers an incoming call to the satellite single mobile station, is enabled.

In the connection control method for the mobile communication system, according to the present invention, the identification information retrieving step retrieves identification information for a satellite single mobile station when an incoming call is undeliverable to a cellular mobile station depending on information about the registration of a position of the cellular mobile station even if a predetermined time has elapsed.

Owing to this, an advantageous effect is obtained in that even when the cellular mobile station 15 is held in a waiting state but is unable to receive or get an incoming call due to a reduction in received level, congestion, etc., a dual function, which automatically delivers an incoming call to the satellite single mobile station 16, is enabled.

In the connection control method for the mobile communication system according to the present invention, the identification information retrieving step retrieves identification information for a satellite single mobile station when an incoming call is undeliverable to a cellular mobile station depending on information about the registration of a position of the cellular mobile station even after a predetermined number of calls have been performed.

Owing to this, an advantageous effect is obtained in that a dual function for delivering an incoming call to the other mobile station even if either one of the mobile stations is kept in a waiting state, is allowed.

In the connection control method for the mobile communication system, according to the present invention, the step of delivering the incoming call to the other mobile station delivers an incoming call to a satellite single mobile station according to retrieved identification information when an approval on the calling side having issued an incoming request is received.

Owing to this, an advantageous effect is obtained in that since the calling side can determine whether switching to a satellite-based system 6 should be performed when conditions for accounting or the like are varied between two systems, a dual function on which a caller's desire is reflected, is enabled.

In the connection control method for the mobile communication system according to the present invention, the step of delivering the incoming call to the mobile station retrieves position registration information at memory addresses specified for two mobile stations according to an incoming request sent from the public telephone network, simultaneously originates calls for the two mobile stations according to the retrieved position registration information, and connects the same to a mobile station answered in advance.

Owing to this, an advantageous effect is obtained in that a prompt incoming process can be performed through the use of a dual function.

In the connection control method for the mobile communication system, according to the present invention, the step of delivering the incoming call to the mobile station delivers an incoming call to a pre-set mobile station of two mobile stations according to retrieved position registration information.

Owing to this, an advantageous effect is obtained in that a dual function capable of coping with updating of subscriber information even when the subscriber information has been updated, is enabled.

In the connection control method for the mobile communication system, according to the present invention, the satellite single mobile station and the cellular mobile station respectively sets incoming mobile stations.

Owing to this, an advantageous effect is obtained in that a dual function can still further be utilized by freely selecting preferentially-incoming mobile stations according to user's desires.

In the connection control method for the mobile communication system according to the present invention, when a preferentially connected mobile station is designated by the satellite single mobile station or the cellular mobile station, the public telephone network sets a priority connection mode according to the designation, and the step of delivering the incoming call to the mobile station precedently delivers an incoming call to the mobile station specified in the priority connection mode.

Owing to this, an advantageous effect is obtained in that a dual function can still further be utilized by freely selecting preferentially-incoming mobile stations according to desires of users for the mobile stations.

In the connection control method for the mobile communication system, according to the present invention, when a preferentially connected mobile station is designated by the calling side having issued an incoming request, the public telephone network sets a priority connection mode according to the designation, and the step of delivering the incoming call to the mobile station precedently delivers an incoming call to the mobile station specified in the priority connection mode.

Owing to this, an advantageous effect is obtained in that a dual function can still further be utilized by freely selecting preferentially-incoming mobile stations according to caller's desires.

In the connection control method for the mobile communication system, according to the present invention, the public telephone network delivers an incoming call to the mobile station having a telephone number designated by the calling side having made an incoming request when the satellite single mobile station and the cellular mobile station are different in telephone number from each other.

Owing to this, an advantageous effect is obtained in that a dual function can rationally be utilized by selecting preferentially-incoming mobile stations according to their telephone numbers.

In the connection control method for the mobile communication system, according to the present invention, the step of delivering the incoming call to the other mobile station inquires of the calling side or called side about the designation of a destination to charge a telephone bill produced by connection to the other mobile station ahead of the incoming process.

Owing to this, an advantageous effect is obtained in that an accounting or billing destination can be selected on the calling side which sets a priority connection mode.

In the connection control method for the mobile communication system, according to the present invention, the position registration information storing step includes a step of storing information about position registration of corresponding mobile stations in respective systems of a plurality of satellite-based systems and a plurality of ground-based systems, and effecting connection control on the corresponding mobile station via any system subjected to the position registration according to an incoming request.

Owing to this, an advantageous effect is obtained in that when an incoming request signal is received from a subscriber telephone, the public telephone network is capable of, when any of a satellite single mobile station and a plurality of cellular mobile stations is registered in position, effecting an incoming process on the mobile station.

A connection control method suitable for a mobile communication system, according to the present invention, includes the steps of: storing information about the registration of a position of a satellite single mobile station in a satellite-based memory according to the position registration from the satellite single mobile station; storing information about the registration of a position of a cellular mobile station in a cellular-based memory according to the position registration from the cellular mobile station; sending an invalid signal for invalidating the information about the position registration of the cellular mobile station, which has been stored in the cellular-based memory, to a ground-based system when the position registration is performed by the satellite single mobile station; and sending a valid signal for validating the information about the position registration of the cellular mobile station in the cellular-based memory, which has been invalidated by the invalid signal, to the ground-based system when the position registration is released from the satellite single mobile station.

Owing to this, an advantageous effect is obtained in that a satellite-based system controls the ground-based system to invalidate or validate the registration of the position of the cellular mobile station corresponding to the other party of a dual function, whereby the simple registration of the position in the satellite-based system by the satellite single mobile station makes it possible to control the registration of the position of the cellular mobile station 15 in the ground-based system.

In the connection control method for the mobile communication system according to the present invention, the invalid signal sending step and the valid signal sending step are executed by the satellite-based system.

Owing to this, an advantageous effect is obtained in that since a public telephone network to which a subscriber telephone of a caller is connected, always manages a satellite system and a ground system, a dual function can efficiently be utilized for an incoming request sent from the caller.

In the connection control method for the mobile communication system, according to the present invention, the invalid signal sending step and the valid signal sending step are executed by the public telephone network which manages the satellite-based system and the ground-based system.

Owing to this, an advantageous effect is obtained in that either the satellite-based system or the ground-based system controls the other thereof to thereby invalidate or validate the registration of the position of the satellite single mobile station corresponding to the other party of a dual function, whereby the simple registration of the position in the system grouping by the mobile station in one system grouping makes it possible to control the registration of the position of the mobile station in the other system grouping.

In the connection control method for the mobile communication system, according to the present invention, the public telephone network stores the position registration information stored in the satellite-based memory in a general memory, and effects connection control on the satellite single mobile station and the cellular mobile station, based on the information stored in the general memory.

Owing to this, the public telephone network needs not access the satellite-based system each time when it retrieves the position registration information.

A connection control method suitable for a mobile communication system, according to the present invention includes the steps of: storing information about the registration of a position of a satellite single mobile station in a satellite-based memory according to the position registration from the satellite single mobile station; storing information about the registration of a position of a cellular mobile station in a cellular-based memory according to the position registration from the cellular mobile station; sending an invalid signal for invalidating the information about the position registration of the satellite mobile station, which has been stored in the satellite-based memory, to a satellite-based system when the position registration is performed by the cellular mobile station; and sending a valid signal for validating the information about the position registration of the satellite single mobile station in the satellite-based memory, which has been invalidated by the invalid signal, to the satellite-based system when the position registration is released from the cellular mobile station.

Owing to this, an advantageous effect is obtained in that the registration of the position of the satellite single mobile station corresponding to the other party of a dual function is invalidated or validated, whereby the simple registration of the position in the ground-based system by the cellular mobile station makes it possible to control the registration of the position of the satellite single mobile station in the satellite-based system.

In the connection control method for the mobile communication system, according to the present invention, the invalid signal sending step and the valid signal sending step are executed by the ground-based system.

Owing to this, an advantageous effect is obtained in that the ground-based system controls the satellite-based system to invalidate or validate the registration of the position of the satellite single mobile station corresponding to the other party of a dual function, whereby the simple registration of the position in the ground-based system by the cellular mobile station makes it possible to control the registration of the position of the satellite single mobile station in the satellite-based system.

In the connection control method for the mobile communication system, according to the present invention, the public telephone network stores the position registration information stored in the cellular-based memory in a general memory, and effects connection control on the satellite single mobile station and the cellular mobile station, based on the information stored in the general memory.

Owing to this, the public telephone network needs not access the ground-based system each time when it retrieves the position registration information.

### BRIEF DESCRIPTION OF THE DRAWINGS

FIG. 1 is a system configuration diagram showing one example of a conventional mobile communication system.
FIG. 2 is a diagram illustrating incoming control executed in the conventional mobile communication system.
FIG. 3 is a system configuration diagram depicting another example of a conventional mobile communication system.
FIG. 4 is a system configuration diagram to which a connection control method for a mobile communication system according to an embodiment 1 of the present invention is applied.
FIG. 5 is a flowchart for describing the connection control method for the mobile communication system according to the embodiment 1 of the present invention.
FIG. 6 is a flowchart for describing a connection control method for a mobile communication system according to an embodiment 2 of the present invention.
FIG. 7 is a flowchart for describing a connection control method for a mobile communication system according to an embodiment 8 of the present invention.
FIG. 8 is a system configuration diagram to which a connection control method for a mobile communication system according to an embodiment 13 of the present invention is applied.
FIG. 9 is a flowchart showing an operation of the mobile communication system according to the embodiment 13 of the present invention.
FIG. 10 is a flowchart illustrating another operation of the mobile communication system according to the embodiment 13 of the present invention.
FIG. 11 is a flowchart depicting a further operation of the mobile communication system according to the embodiment 13 of the present invention.
FIG. 12 is a flowchart showing a still further operation of the mobile communication system according to the embodiment 13 of the present invention.
FIG. 13 is a flowchart illustrating a still further operation of the mobile communication system according to the embodiment 13 of the present invention.
FIG. 14 is a system configuration diagram to which a connection control method for a mobile communication system according to an embodiment 19 of the present invention is applied.
FIG. 15 is a system configuration diagram to which the connection control method for the mobile communication system according to the embodiment 19 of the present invention is applied.

### BEST MODE FOR CARRYING OUT THE INVENTION

Best modes for carrying out the invention will hereinafter be described with reference to the accompanying drawings to explain the present invention in more details.

### Embodiment 1:

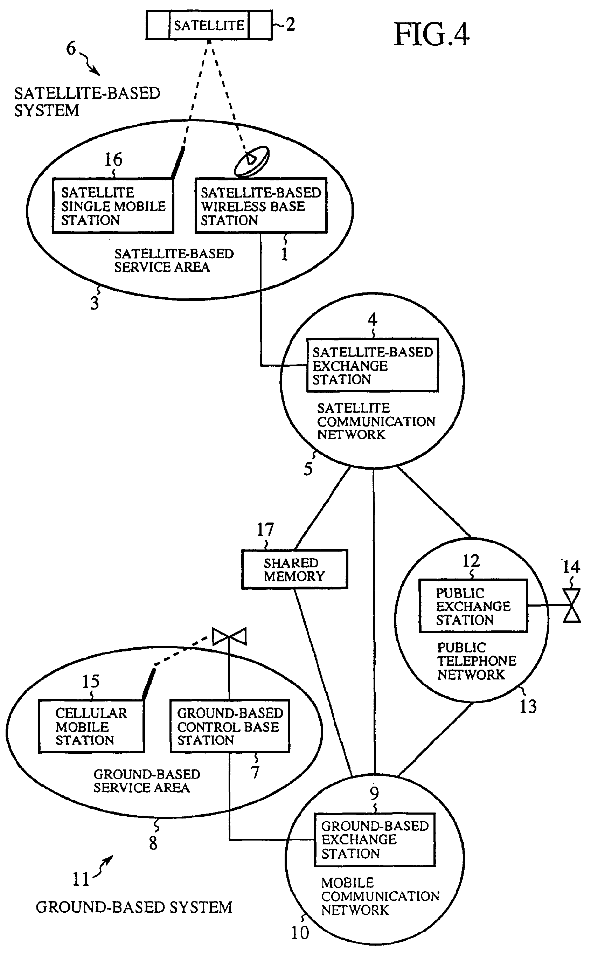

FIG. 4 is a system diagram to which a connection control method of a mobile communication system according to the embodiment 1 is applied. In the drawing, reference numeral 1 indicates a satellite-based wireless base station for managing or controlling a satellite, reference numeral 2 indicates a satellite which communicates with a satellite single mobile station, reference numeral 3 indicates a satellite-based service area for the satellite 2, reference numeral 4 indicates a satellite-based exchange or switching station connected to the satellite-based wireless base station 1, reference numeral 5 indicates a satellite communication network which performs communications between the satellite-based exchange station 4 and other networks, and reference numeral 6 indicates a satellite-based system constructed by these, respectively.

Reference numeral 7 indicates a ground-based control base station which communicates with a cellular mobile station, reference numeral 8 indicates a ground-based service area for the ground-based control base station 7, reference numeral 9 indicates a ground-based exchange or switching station connected to the ground-based control base station 7, reference numeral 10 indicates a mobile communication network which performs communications between the ground-based exchange station 9 and other networks, and reference numeral 11 indicates a ground-based system constructed by these.

Further, reference numeral 12 indicates a public exchange or switching station, reference numeral 13 indicates a public telephone network which performs communications between the public exchange station 12 and other networks, and reference numeral 14 indicates a subscriber telephone wire-connected to the public telephone network 13, respectively.

Furthermore, reference numeral 15 indicates a cellular mobile station which communicates with the ground-based control base station 7 by radio within a zone of the ground-based service area 8, reference numeral 16 indicates a satellite single mobile station which communicates with the satellite 2 by radio within a zone of the satellite-based service area of the satellite-based system, and reference numeral 17 indicates a shared memory, respectively.

The cellular mobile station 15 always receives a radio signal (carrier wave) sent from the ground-based system 11. When the received level of signal is greater than an allowable value, the cellular mobile station 15 makes a decision as being within the zone of the ground-based service area 8, and registers its position into the ground-based exchange station 9 through the ground-base control base station 7 (system registration). The ground-based exchange station 9 stores information about its position registration in the shared memory 17.

The satellite single mobile station 16 always receives a radio signal sent from the satellite-based system 6. When the received level of signal is greater than an allowable value, it is judged that the satellite single mobile station 16 falls within the zone of the satellite-based service area 3. The satellite single mobile station 16 registers its position in the satellite-based exchange station 4 from the satellite 2 via the satellite-based wireless base station 1. The satellite-based exchange station 4 stores information about its position registration in the shared memory 17.

The information about the registrations of the positions of the cellular mobile station 15 and the satellite single mobile station 16 which make a dual function possible, are stored in the same memory address of the shared memory 17 when both telephone numbers are identical to each other, whereas when they are different from each other, the information are stored in memory addresses different from each other.

In this case, the information about the registration of the position of the cellular mobile station 15 per se, and information (in this case: telephone number or memory address at which the telephone number is stored) for identifying the satellite single mobile station 16 corresponding to the other party of the dual function are recorded in their corresponding memory addresses of the cellular mobile station 15.

On the other hand, the information about the registration of the position of the satellite single mobile station 16 per se, and information for identifying the cellular mobile station 15 corresponding to the other party of the dual function, i.e., the telephone number of the cellular mobile station 15 or a memory address at which the telephone number is stored, are recorded in their corresponding memory addresses of the satellite single mobile station 16.

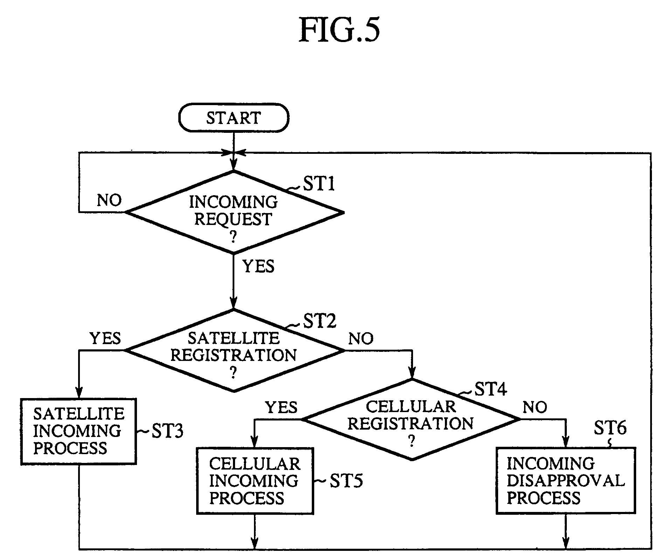

FIG. 5 is a flowchart showing a connection control method according to the embodiment 1.

The operation will next be described.

The mobile communication network 10 determines whether it has received a signal indicative of a request for connection to a mobile station having a dual function from the public telephone network 13 (Step ST1). When the connection request signal is received, the mobile communication network 10 retrieves the shared memory 17 to thereby first determine whether the satellite has been registered (Step ST2). Namely, priority is given to the satellite-based system upon an incoming call. It is determined whether the position of the satellite single mobile station 16 bas been registered.

When the satellite registration has been performed, the mobile communication network 10 sends a connection request signal to the satellite-based exchange station 4 and causes the satellite-based wireless base station 1 to effect a satellite incoming process on the satellite single mobile station 16 via the satellite 2 (Step ST3).

On the other hand, when the position of the satellite single mobile station 16 is not registered in the shared memory 17, the mobile communication network 10 determines whether a cellular registration has been made (Step ST4). Namely, it is determined whether the position of the cellular mobile station 15 has been registered. When it is determined that the cellular registration has been carried out, the mobile communication network 10 sends a connection request signal to the ground-based exchange station 9 to effect a cellular incoming process on the cellular mobile station 15 via the ground-based control base station 7 (Step ST5). When the position of the satellite single mobile station 16 is not registered in the shared memory 17 and the position of the cellular mobile station 15 is not registered therein either, the mobile communication network 10 effects an incoming disapproval or disabling process for returning an incoming disapproval signal on the public telephone network 13 (Step ST6).

After the satellite incoming process in Step ST3, the cellular incoming process in Step ST5, and the incoming disapproval process in Step ST6, the mobile communication network 10 proceeds to Step ST1 and waits for the next connection request signal.

According to the above-described position registering method, the two mobile stations of the cellular mobile station 15 and the satellite single mobile station 16 are used to allow or enable the dual function, based on the connection control method capable of delivering an incoming call to any mobile station.

### Embodiment 2:

While the embodiment 1 has described the case in which priority is given to the operation of the satellite-based system upon incoming, the ground-based system may be given priority.

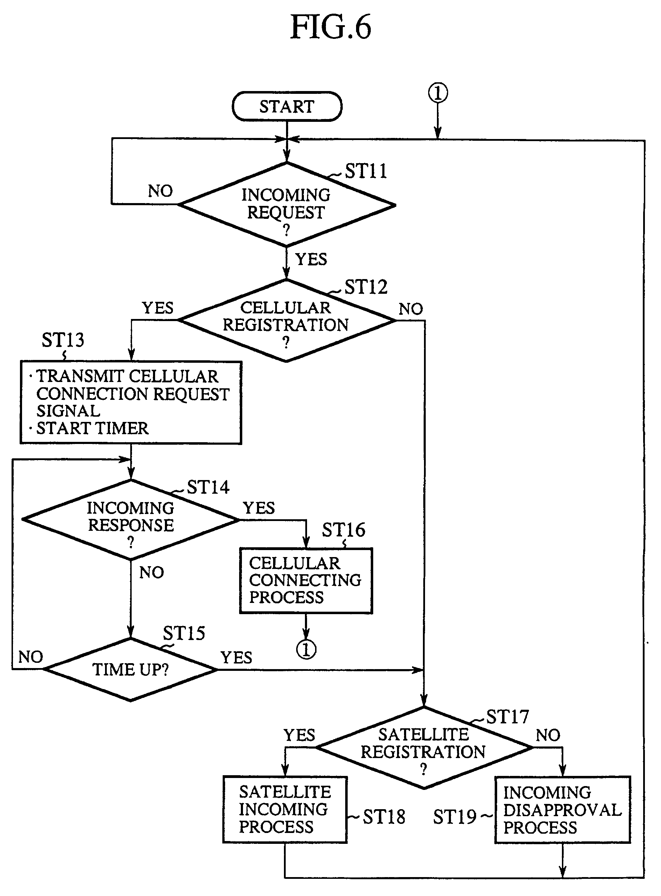

FIG. 6 is a flowchart showing a connection control method according to the embodiment 2.

The operation will next be described.

The mobile communication network 10 determines whether it has received a signal indicative of a request for connection to a mobile station having a dual function from the public telephone network 13 (Step ST11). When the connection request signal is received, the mobile communication network 10 retrieves the shared memory 17 to thereby first determine whether a cellular registration has been carried out (Step ST12). Namely, priority is given to the satellite-based system upon an incoming call and a decision as to whether the position of the cellular mobile station 15 has been registered, is made.

When it is found that the cellular registration has been done, the mobile communication network 10 sends a cellular connection request signal to the ground-based exchange station 9, and performs a cellular incoming process on the cellular mobile station 15 via the ground-base control base station 7 and at the same time starts a timer for measuring or counting a predetermined time (Step ST13).

Further, the mobile communication network 10 determines whether an incoming response is sent from the cellular mobile station 15 (Step ST14). If the incoming response is found not to be sent therefrom, then the mobile communication network 10 determines whether time is up (predetermined time has elapsed) (Step ST15). When it is determined that no time-up occurs, a decision as to the presence or absence of the incoming response is made in Step ST14.

When the incoming response is sent from the cellular mobile station 15, the mobile communication network 10 performs a process for connecting between the public telephone network 13 and the cellular mobile station 15 (Step ST16).

When the cellular registration is found not to be carried out in Step ST12, or when time is up in Step ST15, the mobile communication network 10 determines whether a satellite registration has been performed (Step ST17). Namely, it is determined whether the position of the satellite single mobile station 16 has been registered.

When the satellite registration is found to have been carried out, the mobile communication network 10 sends a connection request signal to the satellite-based exchange station 4 and effects a cellular incoming process on the cellular mobile station 15 through the ground-based control base station 7 (Step ST18).

When the position of the satellite single mobile station 16 is not registered in the shared memory 17, the mobile communication network 10 effects an incoming disapproval process for returning an incoming disapproval signal on the public telephone network 13 (Step ST19).

After the cellular connecting process in Step ST16, the satellite incoming process in Step ST18, or the incoming disapproval process in Step ST19, the mobile communication network 10 proceeds to Step ST11 and waits for the following connection request signal.

As described above, the ground-based system is given priority, and the switching to the satellite-based system is done when no incoming call is made during the predetermined time. Thus, even when the cellular mobile station 15 is held in an awaiting state but is unable to receive or get an incoming call due to a reduction in received level, congestion, etc., the dual function, which automatically delivers the incoming call to the satellite single mobile station 16, is enabled.

### Embodiment 3:

In the embodiment 2, the switching to the satellite-based system is performed where the ground-based system is given priority upon the operation at the incoming call and no incoming call is made during the predetermined period. However, when the switching to the satellite-based system may be performed where the ground-based system is given priority and the cellular mobile station 15 does not get an incoming call even if ringing sounds are made a predetermined number of times.

Even in this case, an effect similar to the above is brought about. Even when the cellular mobile station 15 is held in a waiting state but is unable to receive or get an incoming call due to a reduction in received level, congestion, etc., the dual function, which automatically delivers the incoming call to the satellite single mobile station 16, is enabled.

### Embodiment 4:

In the embodiment 3, the ground-based system is given priority upon the operation at the incoming call, and the switching to the satellite-based system is done when no incoming call is received even if the ringing sounds are made the predetermined number of times. However, a user may set the number of times that the ringing sounds are made, through a man machine interface for the cellular mobile station 15 or the satellite single mobile station 16.

In this case, a dual function capable of setting the number of calls corresponding to a user's waiting state is made possible or enable as in the case where, for example, the user is unable to quickly respond to an incoming call while the cellular mobile station 15 is held in a waiting state.

### Embodiment 5:

In the embodiment 2 or 3, the ground-based system is given priority upon the operation at the incoming call, and the switching to the satellite-based system is performed where no incoming call is made even if the predetermined time has elapsed or the ringing sounds are made the predetermined number of times. However, when the substitution of the satellite-based system 6 for the ground-based system 11 is performed, an inquiry may be sent to the calling or transmitting side about whether or not its substitution should be done.

In this case, since whether or not the switching to the satellite-based system 6 should be performed, can be determined on the transmitting side where conditions for accounting or the like are varied between the two systems, a dual function on which a caller's desire is reflected, is enabled.

### Embodiment 6:

In the embodiment 1, the satellite-based system is given priority upon the operation at the incoming call, whereas the ground-based system is given priority in the embodiments 2 through 5. However, when both the satellite-based system and the ground-based system are registered in position, the mobile communication network may send the connection request signal to both the cellular mobile station 15 and the satellite single mobile station 16 and effect a connecting process on the corresponding mobile station in which the incoming process has normally been completed in advance.

In this case, a prompt incoming process is made possible through the use of a dual function.

### Embodiment 7:

In the embodiment 1, the satellite-based system is given priority upon the operation at the incoming call, whereas the ground-based system is given priority in the embodiments 2 through 5. However, the pre-set mobile station may be given priority. For example, a mobile station with an SIM (subscriber identify module card) inserted therein may be given priority.

In this case, even when subscriber information is updated or renewed by the SIM card, a dual function capable of coping with its renewal is allowed.

### Embodiment 8:

In the embodiment 1, the satellite-based system is given priority upon the operation at the incoming call, whereas in the embodiments 2 through 5, the ground-based system is given priority. However, a user for a mobile station having a dual function may set a priority connection mode from the man machine interface of the cellular mobile station 15 or the satellite single mobile station 16.

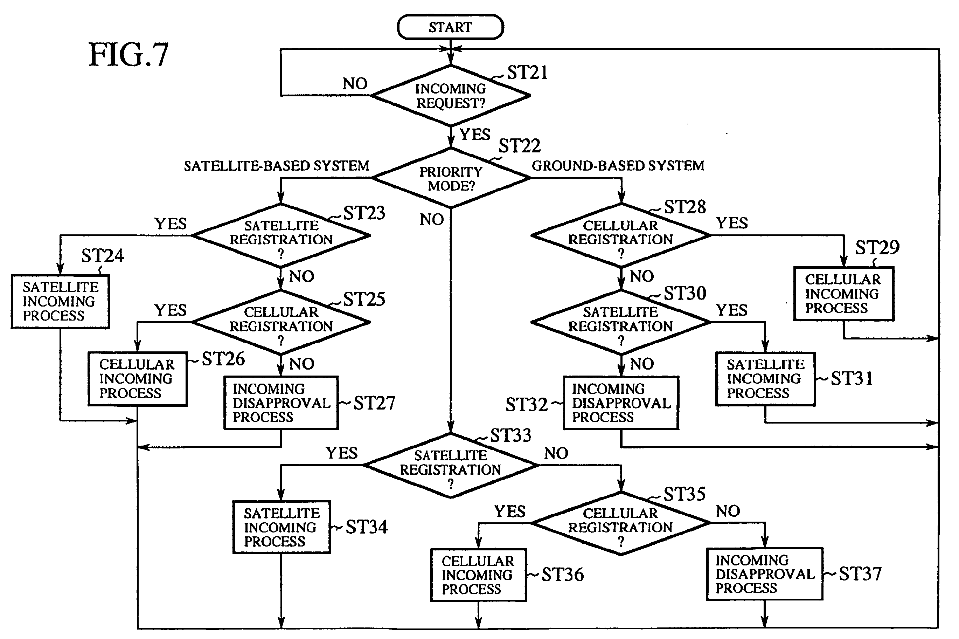

FIG. 7 is a flowchart for describing an incoming control process according to the embodiment 8.

The operation will next be explained.

In FIG. 1, a priority connection mode set signal indicative of which of the cellular mobile station 15 and the satellite single mobile station 16 should be connected preferentially, can be inputted even from either of the mobile stations.

When the priority connection mode set signal is inputted from a user through the man machine interface of the cellular mobile station 15, the cellular mobile station 15 sends the priority connection mode set signal to the ground-based exchange station 9 through the ground-based control base station 7, and information about a priority connection mode is stored in the shared memory 17.

When the priority connection mode set signal is inputted from the user through the man machine interface of the satellite single mobile station 16, the satellite single mobile station 16 sends the priority connection mode set signal to the satellite-based exchange station 4 via the satellite-based wireless base station 1, and information about a priority connection mode is stored in the shared memory 17.

When the cellular mobile station 15 which implements the dual function, and the satellite single mobile station 16 are identical in telephone number to each other, information about a priority connection mode is recorded in the same memory address of the shared memory 17 even when the priority connection mode set signal is inputted through the man machine interface of either of the mobiles.

When the cellular mobile station 15 and the satellite single mobile station 16 are different from each other in telephone number, information about a priority connection mode is recorded in a memory address different from the above, of the shared memory 17. In this case, information about whether the cellular mobile station 15 is placed in the priority connection mode, is recorded within its corresponding memory address of the cellular mobile station 15. Further, information about whether the satellite single mobile station 16 is placed in the priority connection mode, is recorded even within its corresponding memory address of the satellite single mobile station 16 corresponding to the other party of the dual function.

FIG. 7 is a flowchart for describing an incoming control process according to the embodiment 8.

The mobile communication network 10 determines whether it has received a signal indicative of a request for connection to a mobile station having a dual function from the public telephone network 13 (Step ST21). When the connection request signal is received, the mobile communication network 10 retrieves the shared memory 17 to thereby first confirm whether a priority connection mode has been set (Step ST22).

When the priority connection mode which arrives in preference to the satellite-based system, is set, the mobile communication network 10 retrieves the shared memory 17 to thereby determine whether a satellite registration has been performed (Step ST23). When the satellite registration has been carried out, the mobile communication network 10 performs a satellite incoming process (Step ST24). When no satellite registration is done, the mobile communication network 10 determines whether a cellular registration has been performed (Step ST25). When the cellular registration has been performed, the mobile communication network 10 performs a cellular incoming process (Step ST26). When it is judged that the cellular registration has not been performed, the mobile communication network 10 effects an incoming disapproval process on the public telephone network 13 (Step ST27).

On the other hand, when the priority connection mode, which arrives in preference to the ground-based system, is set, the mobile communication network 10 retrieves the shared memory 17 to thereby determine whether the cellular registration has been performed (Step ST28). When it is determined that the cellular registration has been carried out, the mobile communication network 10 performs a cellular incoming process (Step ST29). When no cellular registration is done, the mobile communication network 10 makes a decision as to whether the satellite registration has been performed (Step ST30). When it is determined that the satellite registration has been carried out, the mobile communication network 10 performs a satellite incoming process (Step ST31). When it is determined that both the cellular registration and the satellite registration have not been performed, the mobile communication network 10 effects an incoming disapproval process on the public telephone network 13 (Step ST32).

When no priority connection mode is set, the mobile communication network 10 determines whether a satellite registration has been made to the shared memory 17 (Step ST33). When it is determined that the satellite registration has been performed, the mobile communication network 10 sends a connection request signal to the satellite-based exchange station 4 to thereby cause the satellite-based wireless base station 1 to effect a satellite incoming process on the satellite single mobile station 16 through the satellite 2 (Step ST34).

On the other hand, when it is determined that the satellite registration has not been performed, the mobile communication network 10 determines whether a cellular registration has been made (Step ST35). When it is determined that the cellular registration has been performed, the mobile communication network 10 sends a connection request signal to the ground-based exchange station 9 to thereby effect a cellular incoming process on the cellular mobile station 15 through the ground-based control base station 7 (Step ST36). When it is determined that both the satellite registration and the cellular registration have not been performed, the mobile communication network 10 effects an incoming disapproval process on the public telephone network 13 (Step ST37).

After the satellite incoming process or the cellular incoming process or after the incoming disapproval process, the mobile communication network 10 proceeds to Step ST21, where it waits for the next incoming request signal.

Thus, a dual function can still further be put to use by freely selecting preferentially-incoming mobile stations according to user's desires.

### Embodiment 9:

In the embodiment 8, the user for the corresponding mobile station having the dual function may set the priority connection mode from the man machine interface of the cellular mobile station 15 or the satellite single mobile station 16. However, a caller or sender may set the priority connection mode.

In this case, a dual function can still further be put to practical use by freely selecting preferentially-incoming mobile stations according to caller's desires.

### Embodiment 10:

In the embodiment 8, the caller sets the priority connection mode from the man machine interface of the cellular mobile station 15 or the satellite single mobile station 16. However, when a satellite-based system and a ground-based system are different from each other in telephone number for realizing a dual function, the satellite-based system may be set as a priority connection mode when a caller makes a phone call through the use of a satellite-based telephone number, whereas when the caller makes a call through the use of a ground-based telephone number, the ground-based system may be set as the priority connection mode.

In this case, the dual function can rationally be utilized by selecting preferentially-incoming mobile stations according to their telephone numbers.

### Embodiment 11:

While the caller has set the priority connection mode from the man machine interface of the cellular mobile station 15 or the satellite single mobile station 16 in the embodiment 9, an inquiry may be sent to the transmitting side about which of the caller or called should pay for accounting.

In this case, the transmitting or calling side, which sets a priority connection mode, can select a destination to be charged.

### Embodiment 12:

In the embodiment 11, when the ground-based system 11 is switched to the satellite-based system, the inquiry has been sent to the transmitting side about which of the caller or called should pay for accounting, 6. However, the inquiry may be sent to the incoming side.

In this case, a priority connection mode can be set on the transmitting or calling side, and a destination to be charged can be selected on the incoming side.

Namely, according to the embodiment 11 or 12, the function of selecting the accounting on either the calling side or the incoming side is enabled.

### Embodiment 13:

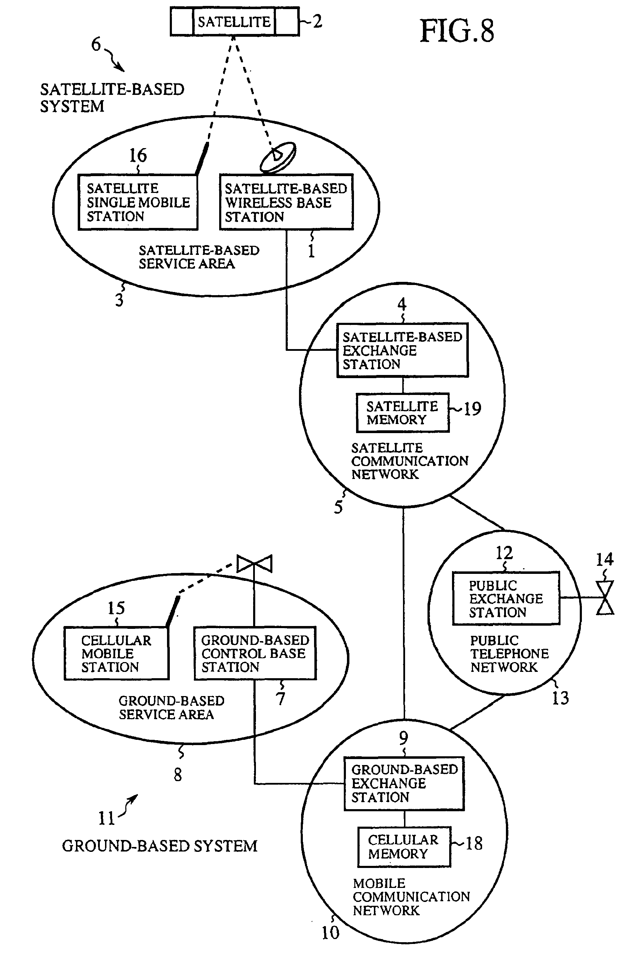

FIG. 8 is a system diagram to which a connection control method of a mobile communication system according to an embodiment 13 is applied. In the drawing, reference numeral 18 indicates a cellular memory, and reference numeral 19 indicates a satellite memory, respectively. Other configurations of the embodiment 13 are identical to those shown in FIG. 4. They are respectively identified by the same reference numeral and their description will therefore be omitted.

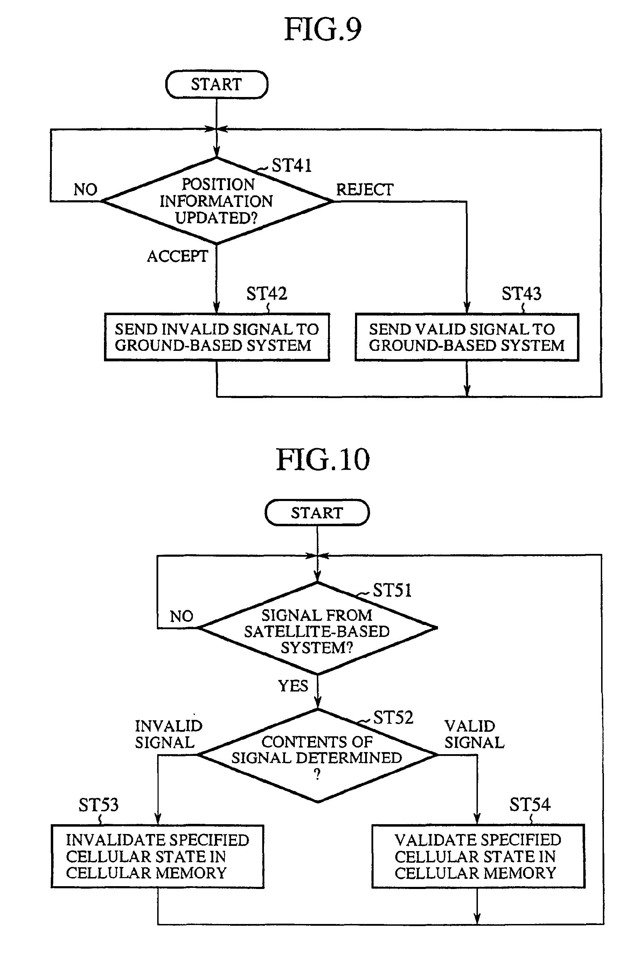

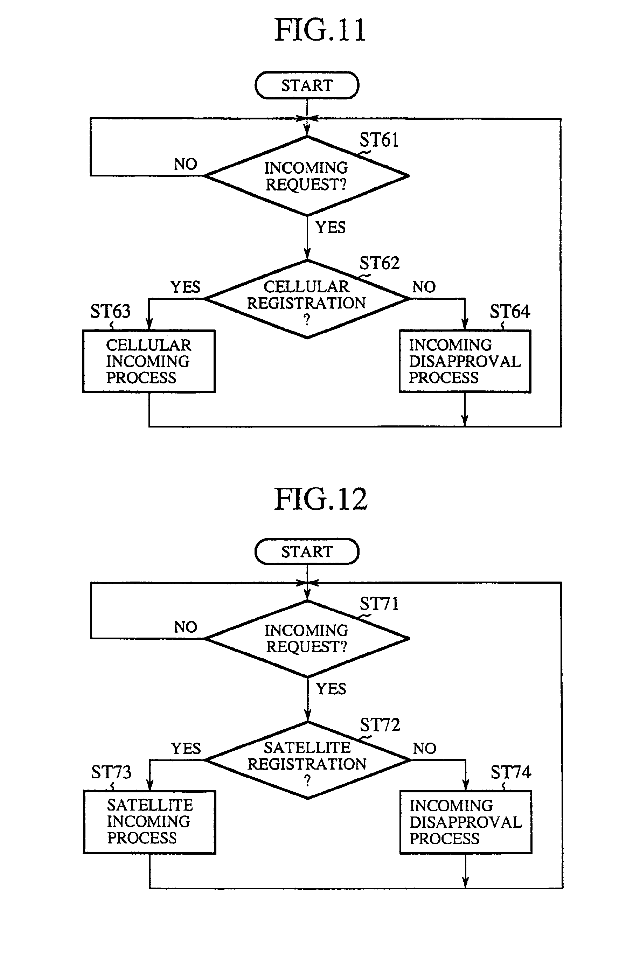

FIGS. 9 through 13 are respectively flowcharts for describing the connection control method according to the embodiment 13. In a further detail, FIGS. 9 and 10 respectively show the operation of controlling a position registration, and FIGS. 11 through 13 respectively show an incoming control operation.

The operation will next be explained.

A cellular mobile station 15 always receives a signal sent from a ground-based system 11. When the received level of signal is greater than an allowable value, it is judged that the cellular mobile station 15 falls within a ground-based service area 5. Further, the cellular mobile station 15 effects a position registration thereof on a ground-based exchange station 9 through a ground-based control base station 7, and information about the position registration is stored in a cellular memory 18.

A satellite single mobile station 16 always receives a signal sent from a satellite-based system 6. When the received level of signal becomes greater than an allowable value, it is determined that the satellite single mobile station 16 falls within a zone of a satellite-based service area 3. Further, the satellite single mobile station 16 sends a signal for performing the position registration thereof from a satellite 2 to a satellite-based exchange station 4 via a satellite-based wireless base station 1, thereby performing a change in position information.

In the flowchart shown in FIG. 9, the satellite-based exchange station 4 determines whether the change in position information is issued from the satellite single mobile station 16 via the satellite 2 (Step ST41). When a change (zone of service area: Accept) in position registration is found to have occurred, information about the position registration is stored in a satellite memory 19. Further, in this case, the satellite-based exchange station 4 sends a signal invalid for the information about the registration of the position of the cellular mobile station 15 corresponding to the other party of a dual function to the ground-based exchange station 9 (Step ST42).

When the received level of signal sent from the satellite-based system 6 reaches less than an allowable value, the satellite single mobile station 16 judges to fall beyond the zone of the satellite-based service area 3. Further, the satellite single mobile station 16 sends a signal for deleting a satellite registration to the satellite-based exchange station 4 via the satellite 2 to thereby change its position registration.

In the flowchart shown in FIG. 9, the satellite-based exchange station 4 determines whether the change in position information is issued from the satellite single mobile station 16 via the satellite 2 (Step ST41). When a change (zone of service area: Reject) in position registration release is found to have occurred, the position registration stored in the satellite memory 19 is deleted. Further, in this case, the satellite-based exchange station 4 sends a signal valid or effective for the information about the registration of the position of the cellular mobile station 15 corresponding to the other party of the dual function to the ground-based exchange station 9 (Step ST43).

In the flowchart shown in FIG. 10, the ground-based exchange station 9 determines whether a signal is sent from the satellite-based system (Step ST51). When the signal is found to have been sent therefrom, the ground-based exchange station 9 makes a decision as to the contents of the signal (Step ST52). When the contents of the signal indicates an invalid signal, the ground-based exchange station 9 invalidates a specified cellular state in the cellular memory 18 (Step ST53). When the contents of the signal indicates a valid signal, the ground-based exchange station 9 validates the specified cellular state in the cellular memory 18 (Step ST54).

When a public telephone network 13 receives a signal indicative of a request for connection to a mobile station having a dual function from a subscriber telephone 14, it first sends a connection request signal to a mobile communication network 10.

In the flowchart shown in FIG. 11, the ground-based exchange station 9, which manages the mobile communication network 10, determines whether it has received the connection request signal (Step ST61). When the connection request signal is received, the ground-based exchange station 9 determines whether the position of the cellular mobile station 15 has been registered in the cellular memory 18 and its position registration is valid (Step ST62). When the position registration is found to be valid, the ground-based exchange station 9 effects an incoming process on the cellular mobile station 15 through the ground-based control base station 7 (Step ST63). When the position of the cellular mobile station 15 is found not to have been registered in the cellular memory 18 or the position registration is found to be invalid, the ground-based exchange station 9 returns an incoming disapproval from the mobile communication network 10 to the public telephone network 13 (Step ST64). Namely, the ground-based exchange station 9 performs an incoming disapproval process.

When the incoming disapproval is returned to the public telephone network 13, the public telephone network 13 sends a connection request signal to a satellite communication network 5.

In the flowchart shown in FIG. 12, the satellite-based exchange station 4, which manages the satellite communication network 5, determines whether it has received a connection request signal (Step ST71). When the connection request signal is received, the satellite-based exchange station 4 determines whether the position of the satellite single mobile station 16 has been registered in the satellite memory 19 (Step ST72). When the position registration has been performed, the satellite-based exchange station 4 causes the satellite-based wireless base station 1 to effect an incoming process on the satellite single mobile station 16 via the satellite 2 (Step ST73). When the position of the satellite single mobile station 16 is not registered in the satellite memory 19, an incoming disapproval is returned from the satellite communication network 5 to the public telephone network 13 (Step ST74).

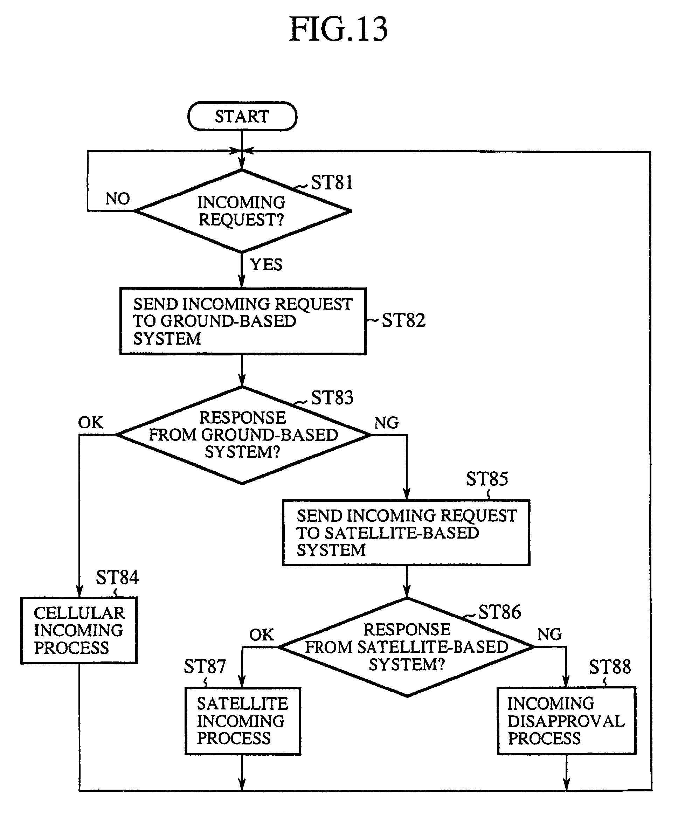

FIG. 13 is a flowchart for describing the incoming control process of the public telephone network 13.

The public telephone network 13 determines whether it has received an incoming connection request signal from the subscriber telephone 14 (Step ST81). When the incoming connection request signal is received, the public telephone network 13 first sends an incoming request signal to the ground-based system (Step ST82). The public telephone network 13 determines whether a response from the ground-based system has been made (Step ST83). When a response indicative of an incoming approval (OK) is made, the public telephone network 13 performs a cellular incoming process (Step ST84).

When a response indicative of an incoming disapproval (NG) is made, the public telephone network 13 transmits an incoming request signal to the satellite-based system (Step ST85). Further, the public telephone network 13 determines whether a response from the satellite-based system has been made (Step ST86). When the response of the incoming approval (OK) is made, the public telephone network 13 performs a satellite incoming process (Step ST87). When the response of the incoming disapproval (NG) is issued, the public telephone network 13 effects an incoming disapproval process on the subscriber telephone 14 (Step ST88).

As described above, the satellite-based system controls the ground-based system to invalidate or validate the registration of the position of the cellular mobile station 15 corresponding to the other party of the dual function, whereby the simple registration of the position in the satellite-based system by the satellite single mobile station 16 makes it possible to control the registration of the position of the cellular mobile station 15 in the ground-based system.

### Embodiment 14:

In the embodiment 13, the satellite-based system controls the ground-based system in accordance with the state of the position registration of the satellite single mobile station 16 to thereby invalidate or validate the registration of the position of the cellular mobile station 15 corresponding to the other party of the dual function. However, the public telephone network 13 may manage the satellite-based system and the ground-based system at all times to thereby invalidate or validate the registration of the position of the cellular mobile station 15 corresponding to the other party of the dual function with respect to the ground-based system in accordance with the state of the position registration of the satellite single mobile station 16.

Since, in this case, the public telephone network 13 to which the subscriber telephone 14 corresponding to the caller is connected, manages the satellite-based system and the ground-based system at all times, the dual function can efficiently be utilized for the incoming request made from the caller.

### Embodiment 15:

In the embodiment 13, the satellite-based system controls the ground-based system in accordance with the state of the position registration of the satellite single mobile station 16 to thereby invalidate or validate the registration of the position of the cellular mobile station 15 corresponding to the other party of the dual function. However, the mobile communication network 10 may manage the satellite-based system at all times and capture or take in the information stored in the satellite memory 19 to thereby invalidate or validate the registration of the position of the cellular mobile station 15 corresponding to the other party of the dual function in accordance with the state of the position registration of the satellite single mobile station 16.

In a manner similar to the embodiment 13 even in this case, the ground-based system controls the satellite-based system to thereby invalidate or validate the position registration of the satellite single mobile station 16 corresponding to the other party of the dual function. Thus, the simple position registration effected on the ground-based system by the cellular mobile station 15 makes it possible to control the registration of the position of the satellite single mobile station 16 in the satellite-based system.

### Embodiment 16:

In the embodiment 13, the satellite-based system controls the ground-based system in accordance with the state of the position registration of the satellite single mobile station 16 to thereby invalidate or validate the registration of the position of the cellular mobile station 15 corresponding to the other party of the dual function. However, the public telephone network 13 may manage the satellite-based system and the ground-based system and take in the information stored in the satellite memory 19 and the cellular memory 18 to store the same in a general memory, thereby directly performing connection control.

In a manner similar to the embodiment 13 even in this case, the ground-based system controls the satellite-based system to thereby invalidate or validate the position registration of the satellite single mobile station 16 corresponding to the other party of the dual function. Thus, the simple position registration effected on the ground-based system by the cellular mobile station 15 makes it possible to control the registration of the position of the satellite single mobile station 16 in the satellite-based system.

### Embodiment 17:

In the embodiment 16, the public telephone network 13 has captured the information about the satellite-based system and the ground-based system so as to perform the direct control. However, the satellite communication network 5 manages the ground-based system and takes in the information stored in the cellular memory 18 to store the same in the satellite memory 19. Further, when a connection request is made, the public telephone network 13 sends a connection request to the satellite communication network 5, whereby the satellite communication network 5 may directly perform connection control on the ground-based system.

In a manner similar to the embodiment 13 even in this case, the ground-based system controls the satellite-based system to thereby invalidate or validate the position registration of the satellite single mobile station 16 corresponding to the other party of the dual function. Thus, the simple position registration effected on the ground-based system by the cellular mobile station 15 makes it possible to control the registration of the position of the satellite single mobile station 16 in the satellite-based system.

### Embodiment 18:

In the embodiment 16, the public telephone network 13 has captured the information about the satellite-based system and the ground-based system so as to perform the direct control. However, the mobile communication network 10 manages the satellite-based system and captures the information stored in the satellite memory 19 to store the same in the cellular memory 18. Further, when a connection request is made, the public telephone network 13 sends a connection request to the mobile communication network 10, whereby the mobile communication network 10 may directly perform connection control on the satellite-based system.

In a manner similar to the embodiment 13 even in this case, the ground-based system controls the satellite-based system to thereby invalidate or validate the position registration of the satellite single mobile station 16 corresponding to the other party of the dual function, whereby the simple position registration effected on the ground-based system by the cellular mobile station 15 makes it possible to control the registration of the position of the satellite single mobile station 16 in the satellite-based system.

### Embodiment 19:

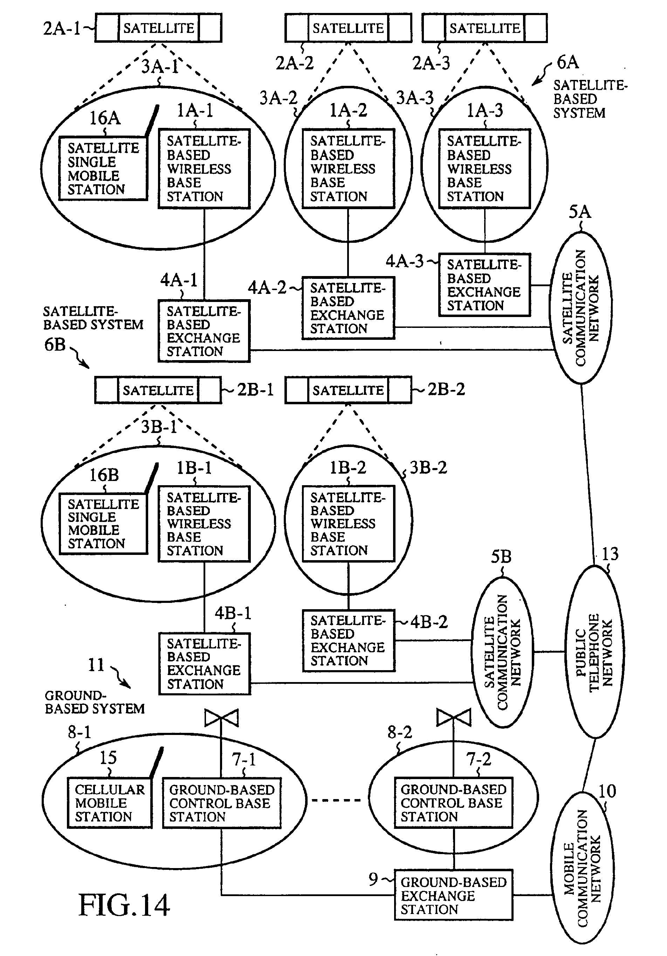

FIG. 14 is a system diagram to which a connection control method for a mobile communication system according to the present embodiment 19 is applied. In the drawing, reference numerals 6A and 6B indicate two satellite-based systems, reference numeral 11 indicates a ground-system system, and reference numeral 13 indicates a public telephone network, respectively. The two satellite-based systems 6A, 6B and the ground-based system 11 can be connected to the public telephone network 13.

In the satellite-based system 6A, designated at numerals 1A-1, 1A-2 and 1A-3 are a plurality of satellite-based wireless base stations, designated at numerals 2A-1, 2A-2 and 2A-3 are a plurality of satellites which respectively perform wireless communications with the satellite-based wireless base stations 1A-1, 1A-2 and 1A-3, designated at numerals 3A-1, 3A-2 and 3A-3 are a plurality of satellite-based service areas, designated at numerals 4A-1, 4A-2 and 4A-3 are satellite-based exchange or switching stations respectively connected to the satellitebased wireless base stations 1A-1, 1A-2 and 1A-3, designated at numeral 5A is a satellite communication network which is connected to the satellite-based exchange stations 4A-1, 4A-2 and 4A-3 and connects the satellite-based system 6A and the public telephone network 13, and designated at numeral 16A is a satellite single mobile station in the satellite-based system 6A.

In the satellite-based system 6B, designated at numerals 1B-1 and 1B-2 are a plurality of satellite-based wireless base stations, designated at numerals 2B-1 and 2B-2 are a plurality of satellites which respectively perform wireless communications with the satellite-based wireless base stations 1B-1 and 1B-2, designated at numerals 3B-1 and 3-2 are a plurality of satellite-based service areas, designated at numerals 4B-1 and 4B-2 are satellite-based exchange or switching stations respectively connected to the satellite-based wireless base stations 1B-1 and 1B-2, designated at numeral 5B is a satellite communication network which is connected to the satellite-based exchange stations 4B-1 and 4B-2 and connects the satellite-based system 6B and the public telephone network 13, and designated at numeral 16B is a satellite single mobile station in the satellite-based system 6B.

Incidentally, the ground-based system 11 is identical in configuration to that in the embodiment 13 described above. Those employed in the ground-based system 11 are identified by the same reference numerals and their description will therefore be omitted.

The operation will next be explained.

The satellite single mobile station 16A performs wireless communications with the corresponding satellite-based wireless base stations 1A-1, 1A-2 and 1A-3 via the plural satellites 2A-1, 2A-2 and 2A-3 in the satellite-based service areas 3A-1, 3A-2 and 3A-3 corresponding to the satellites as well as with any of the plurality of satellites 2A-1, 2A-2 and 2A-3 of the satellite-based system 6A. Further, the satellite single mobile station 16A is capable of effecting a satellite registration on the satellite communication network 5A even in any of the satellite-based service areas 3A-1, 3A-2 and 3A-3 in the satellite-based system 6A.

Similarly, the satellite single mobile station 16B performs wireless communications with the corresponding satellite-based wireless base stations 4B-1 and 4B-2 via the satellites 2B-1 and 2B-2 in the satellite-based service areas 3B-1 and 3B-2 corresponding to the satellites as well as with any of the plurality of satellites 2B-1 and 2B-2 of the satellite-based system 6B. Further, the satellite single mobile station 16B is capable of effecting a satellite registration on the satellite communication network 5B even in the satellite-based service areas 3B-1 and 3B-2 in the satellite-based system 6B.

On the other hand, a cellular mobile station 15 is capable of effecting a cellular registration on a mobile communication network 10 in ground-based service areas 8-1 and 8-2 in a manner similar to the embodiment 1 or 13. Further, the cellular mobile station 15 provides a dual function even for both the satellite single mobile station 16A and the satellite single mobile station 16B.

Thus, when an incoming request signal is received from a subscriber telephone (not shown), the public telephone network 13 is capable of making use of the dual function and thereby effecting an incoming process on each of the satellite single mobile station 16A, satellite single mobile station 16B and cellular mobile station 15 according to a connection control method similar to the embodiments described above where the position of either the satellite single mobile station 16A, the satellite single mobile station 16B or the cellular mobile station 15 is registered.

Thus, even in the case of two satellite-based systems and one ground-based system, the cellular mobile station 15 and the two satellite single mobile stations 16A and 16B are used to enable the dual function capable of being destined for any mobile stations.

In this embodiment, an example having two satellite-based systems is described. However, even when three or more satellite-based systems are provided, it is possible to effect an incoming process on the mobile station whose position is registered, by making use of the dual function.

### Embodiment 20:

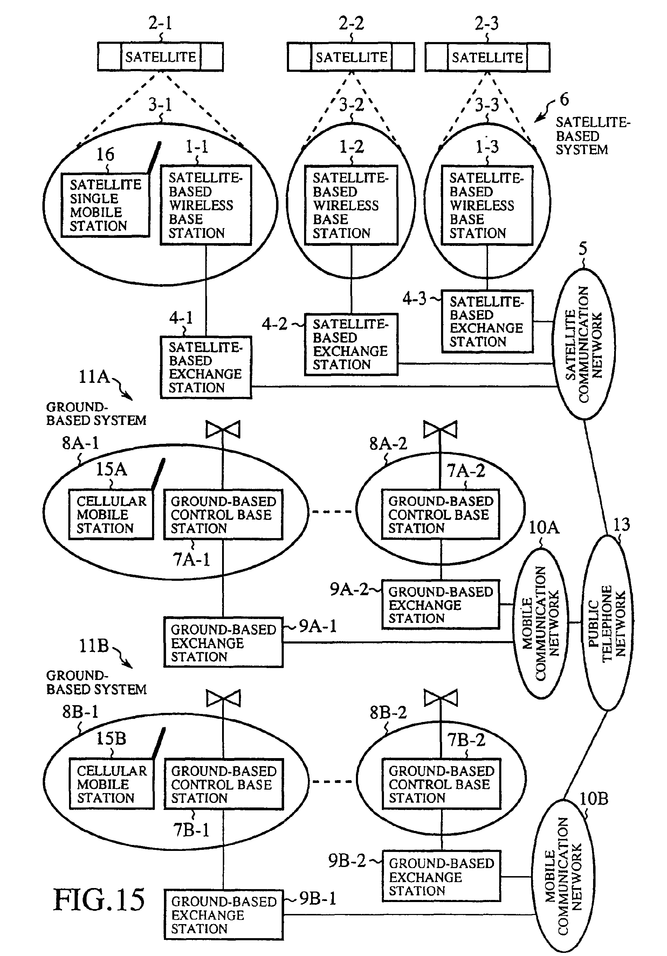

FIG. 15 is a system diagram to which a connection control method of a mobile communication system according to an embodiment 20 of the present invention is applied. In the drawing, reference numeral 6 indicates a satellite-based system, reference numerals 11A and 11B indicate two ground-based systems, and reference numeral 13 indicates a public telephone network, respectively. The satellite-based system 6 and the ground-based systems 11A and 11B can respectively be connected to the public telephone network 13.

In the satellite-based system 6, designated at numerals 1-1, 1-2 and 1-3 are a plurality of satellite-based wireless base stations, designated at numerals 2-1, 2-2 and 2-3 are a plurality of satellites which respectively perform wireless communications with the satellite-based wireless base stations 1-1, 1-2 and 1-3, designated at numerals 3-1, 3-2 and 3-3 are a plurality of satellite-based service areas, designated at numerals 4-1, 4-2 and 4-3 are satellite-based exchange or switching stations respectively connected to the satellite-based wireless base stations 1-1, 1-2 and 1-3, designated at numeral 5 is a satellite communication network which is connected to the satellite-based exchange stations 4-1, 4-2 and 4-3 and connects the satellite-based system 6 and the public telephone network 13, and designated at numeral 16 is a satellite single mobile station in the satellite-based system 6.

In the ground-based system 11A, designated at numerals 7A-1 and 7A-2 are ground-based control base stations, designated at numerals 8A-1 and 8A-2 are ground-based service areas, designated at numerals 9A-1 and 9A-2 are ground-based exchange or switching stations, designated at numeral 10A is a mobile communication network, and designated at numeral 15A is a cellular mobile station in the ground-based system 11A, respectively.

In the ground-based system 11B, designated at numerals 7B-1 and 7B-2 are ground-based control base stations, designated at numerals 8B-1 and 8B-2 are ground-based service areas, designated at numerals 9B-1 and 9B-2 are ground-based exchange or switching stations, designated at numeral 10B is a mobile communication network, and designated at numeral 15B is a cellular mobile station in the ground-based system 11B, respectively.

The satellite single mobile station 16 performs wireless communications with the corresponding satellite-based wireless base stations 1-1, 1-2 and 1-3 via the plural satellites 2-1, 2-2 and 2-3 in the satellite-based service areas 3-1, 3-2 and 3-3 corresponding to the satellites as well as with any of the plurality of satellites 2-1, 2-2 and 2-3 of the satellite-based system 6. Further, the satellite single mobile station 16 is capable of effecting a satellite registration on the satellite communication network 5 even in any of the satellite-based service areas 3-1, 3-2 and 3-3 in the satellite-based system 6.

On the other hand, the cellular mobile station 15A is capable of effecting a cellular registration on the mobile communication network 10A through the corresponding ground-based control base stations 7A-1 and 7A-2 and ground-based exchange stations 9A-1 and 9A-2 in the plurality of ground-based service areas 8A-1 and 8A-2 of the ground-based system 11A. Further, the cellular mobile station 15A has a dual function for the satellite single mobile station 16.

Similarly, the cellular mobile station 15B is capable of effecting a cellular registration on the mobile communication network 10B through the corresponding ground-based control base stations 7B-1 and 7B-2 and ground-based exchange stations 9B-1 and 9B-2 in the plurality of ground-based service areas 8B-1 and 8B-2 of the ground-based system 11B. Further, the cellular mobile station 15B has a dual function for the satellite single mobile station 16.

Thus, when the public telephone network 13 receives an incoming request signal from a subscriber telephone (not shown), the public telephone network 13 is capable of making use of the dual function and thereby effecting an incoming process on each of the satellite single mobile station 16, cellular mobile station 15A and cellular mobile station 15B according to a connection control method similar to each of the embodiments where the position of either the satellite single mobile station 16, the cellular mobile station 16A or the cellular mobile station 15B is registered.

Even in the case of one satellite-based system and two ground-based systems as described above, the two cellular mobile stations 15A and 15B and the satellite single mobile station 16 are used to enable the dual function capable of being destined for any mobile stations.

In this embodiment, an example having two ground-based systems is described. However, even when three or more ground-based systems are provided, it is possible to effect an incoming process on each mobile station whose position is registered, by making use of the dual function.

### INDUSTRIAL APPLICABILITY

Thus, the connection control method for the mobile communication system according to the present invention is suitable for use in a system wherein when an incoming call cannot be sent to a cellular mobile station of a ground-based system by making use of a dual function, an incoming call is automatically sent to a satellite single mobile station, thereby making it possible to effect connection control on the two mobile stations different in system.

## Claims

1. A connection control method suitable for a mobile communication system including a mobile station connected to a satellite-based system by radio, a mobile station connected to a ground-based system by radio, and a public telephone network which sends an incoming request to the two mobile stations, said method comprising the steps of:
registering positions of the respective mobile stations in system groupings to which the respective mobile stations correspond;
storing information about the registration of a position of one mobile station at a memory address specified for the corresponding mobile station;
storing information for identifying the other mobile station at the specified memory address;
retrieving information about a position registration at a memory address specified for any of the mobile stations according to the incoming request sent from the public telephone network;
retrieving the information for identifying the other mobile station, which is stored at the memory address for the corresponding position registration information when an incoming call is undeliverable to the corresponding mobile station depending on the retrieved position registration information; and
delivering an incoming call to the other mobile station according to the retrieved identification information.

2. The connection control method according to claim 1, wherein said identification information retrieving step retrieves identification information for a satellite single mobile station when an incoming call is undeliverable to a cellular mobile station depending on information about the registration of a position of the cellular mobile station, and said step of delivering the incoming call to the mobile station delivers an incoming call to the satellite single mobile station according to the retrieved identification information.

3. The connection control method according to claim 2, wherein said identification information retrieving step retrieves identification information for a satellite single mobile station when an incoming call is undeliverable to a cellular mobile station depending on information about the registration of a position of the cellular mobile station even if a predetermined time has elapsed.

4. The connection control method according to claim 2, wherein said identification information retrieving step retrieves identification information for a satellite single mobile station when an incoming call is undeliverable to a cellular mobile station depending on information about the registration of a position of the cellular mobile station even after a predetermined number of calls are performed.

5. The connection control method according to claim 2, wherein said step of delivering the incoming call to the other mobile station delivers an incoming call to a satellite single mobile station according to retrieved identification information when an approval on the calling side having issued an incoming request is received.

6. The connection control method according to claim 1, wherein said step of delivering the incoming call to the mobile station retrieves position registration information at memory addresses specified for two mobile stations according to an incoming request sent from the public telephone network, originates calls for the two mobile stations according to the retrieved position registration information, and connects the same to a mobile station answered in advance.

7. The connection control method according to claim 6, wherein said step of delivering the incoming call to the mobile station delivers an incoming call to a pre-set mobile station of two mobile stations according to retrieved position registration information.

8. The connection control method according to claim 1, wherein the satellite single mobile station and the cellular mobile station respectively set the incoming mobile stations.

9. The connection control method according to claim 1, wherein when a preferentially connected mobile station is designated by the satellite single mobile station or the cellular mobile station, the public telephone network sets a priority connection mode according to the designation, and wherein said step of delivering the incoming call to the mobile station precedently delivers an incoming call to the mobile station specified in the priority connection mode.

10. The connection control method according to claim 1, wherein when a preferentially connected mobile station is designated by the calling side having issued an incoming request, the public telephone network sets a priority connection mode according to the designation, and wherein said step of delivering the incoming call to the mobile station precedently delivers an incoming call to the mobile station specified in the priority connection mode.

11. The connection control method according to claim 1, wherein the public telephone network delivers an incoming call to a mobile station having a telephone number designated by the calling side having made an incoming request when the satellite single mobile station and the cellular mobile station are different in telephone number from each other.

12. The connection control method according to claim 1, wherein said step of delivering the incoming call to the other mobile station inquires of the calling side or called side about the designation of a destination to charge a telephone bill produced by connection to the other mobile station ahead of the incoming process.

13. The connection control method according to claim 1, wherein said position registration information storing step includes a step of storing information about position registration of corresponding mobile stations in respective systems of a plurality of satellite-based systems and a plurality of ground-based systems, and effecting connection control on the corresponding mobile station via any system subjected to the position registration according to an incoming request.

14. A connection control method suitable for a mobile communication system including a satellite single mobile station connected to a satellite-based system by radio, a cellular mobile station connected to a ground-based system by radio, and a public telephone network which sends an incoming request to each of the two mobile stations, said method comprising the steps of:
storing information about the registration of a position of the satellite single mobile station in a satellite-based memory according to the position registration from the satellite single mobile station;
storing information about the registration of a position of the cellular mobile station in a cellular-based memory according to the position registration from the cellular mobile station;
sending an invalid signal for invalidating the information about the position registration of the cellular mobile station, which is stored in the cellular-based memory, to the ground-based system when the position registration is performed by the satellite single mobile station; and
sending a valid signal for validating the information about the position registration of the cellular mobile station in the cellular-based memory, which is invalidated by the invalid signal, to the ground-based system when the position registration is released from the satellite single mobile station.

15. The connection control method according to claim 14, wherein said invalid signal sending step and said valid signal sending step are executed by the satellite-based system.

16. The connection control method according to claim 14, wherein said invalid signal sending step and said valid signal sending step are executed by the public telephone network which manages the satellite-based system and the ground-based system.

17. The connection control method according to claim 14, wherein the public telephone network stores the information stored in the satellite-based memory in a general memory, and effects connection control on the satellite single mobile station and the cellular mobile station based on the information stored in the general memory.

18. The connection control method according to claim 14, wherein said position registration information storing step includes a step of storing information about position registration of corresponding mobile stations in respective systems of a plurality of satellite-based systems and a plurality of ground-based systems, and effecting connection control on the corresponding mobile station via any system subjected to the position registration according to an incoming request.

19. A connection control method suitable for a mobile communication system including a satellite single mobile station connected to a satellite-based system by radio, a cellular mobile station connected to a ground-based system by radio, and a public telephone network which sends an incoming request to each of the two mobile stations, said method comprising the steps of:
storing information about the registration of a position of the satellite single mobile station in a satellite-based memory according to the position registration from the satellite single mobile station;
storing information about the registration of a position of the cellular mobile station in a cellular-based memory according to the position registration from the cellular mobile station;
sending an invalid signal for invalidating the information about the position registration of the satellite single mobile station, which has been stored in the satellite-based memory, to the satellite-based system when the position registration is performed by the cellular mobile station; and
sending a valid signal for validating the information about the position registration of the satellite single mobile station in the satellite-based memory, which has been invalidated by the invalid signal, to the satellite-based system when the position registration is released from the cellular mobile station.

20. The connection control method according to claim 19, wherein said invalid signal sending step and said valid signal sending step are executed by the ground-based system.

21. The connection control method according to claim 19, wherein said invalid signal sending step and said valid signal sending step are executed by the public telephone network which manages the satellite-based system and the ground-based system.

22. The connection control method according to claim 19, wherein the public telephone network stores the information stored in the cellular-based memory in a general memory, and effects connection control on the satellite single mobile station and the cellular mobile station based on the information stored in the general memory.

23. The connection control method according to claim 19, wherein said position registration information storing step includes a step of storing information about position registration of corresponding mobile stations in respective systems of a plurality of satellite-based systems and a plurality of ground-based systems, and effecting connection control on the corresponding mobile station via any system subjected to the position registration according to an incoming request.
